# EUROPEAN PATENT SPECIFICATION

(11) **EP 2 073 104 B1**
(45) Date of publication and mention of the grant of the patent: **28.04.2010**
(21) Application number: 07123699.6
(22) Date of filing: 19.12.2007
(51) Int. Cl.: G06F 3/03

(54) **Trackball input for handheld electronic device**
Rollkugeleingabe für ein elektronisches Handgerät
Entrée de boule de commande pour dispositif électronique portable

(43) Date of publication of application: 24.06.2009
(73) Proprietor: Research In Motion Limited, Waterloo, Ontario N2L 3W8 (CA)
(72) Inventor: Heuvel David Vanden, Ottawa, Ontario K2G 5J7 (CA)
(74) Representative: Phillips, Emily Elizabeth

(56) References cited:
- EP-A- 1 073 004
- EP-A- 1 378 856
- EP-A- 1 777 608
- DE-A1- 10 332 614
- DE-U1-202006 002 499
- FR-A- 2 822 271

## Description

### FIELD

This disclosure, in a broad sense, is directed toward a handheld electronic communication device that has wireless communication capabilities and the networks within which the handheld electronic communication device operates. More particularly, the disclosure relates to a mechanism by means of which an operator interfaces with the device to "navigate" the device.

### BACKGROUND

With the proliferation of wireless communication systems, compatible handheld communication devices are becoming more prevalent, as well as advanced. Whereas in the past such handheld communication devices were typically limited to either voice transmission (cell phones) or text transmission (pagers and PDAs), today's consumer often demands a multifunctional device capable of performing both types of transmissions, including even sending and receiving e-mail. Furthermore, these higher-performance devices can also be capable of sending and receiving other types of data including that which allows the viewing and use of Internet websites. These higher level functionalities necessarily require greater user interaction with the devices through included user interfaces (UIs) which may have originally been designed to accommodate making and receiving telephone calls and sending messages over a related Short Messaging Service (SMS). As might be expected, suppliers of such mobile communication devices and the related service providers are anxious to meet these customer requirements, but the demands of these more advanced functionalities have in many circumstances rendered the traditional user interfaces unsatisfactory, a situation that has caused designers to have to improve the UIs through which users input information and control these sophisticated operations.

Keyboards are used on many handheld electronic communication devices, including telephones and mobile communication devices. The size of keyboards has been reduced over the years, as newer, smaller devices have become popular. Cell phones, for example, are now sized to fit in one's pocket or the palm of the hand. As the size of the devices has decreased, the more important it has become to utilize the entire keyboard surface as efficiently as possible.

Many keyboards on mobile devices have an input device for navigation through the graphical user interface. These interfaces include such devices as trackballs and rotating wheels which can be used to effect movement of a cursor or pointer, or to scroll up, down and about a displayed page. When in a scrolling mode, these input devices require a user to roll the trackball or rotating wheel using a finger or thumb, lift the finger or thumb, and repeat until the user has reached the desired position on the graphical user interface.

US2003/0169235 discloses a trackball capable of sensing motions three-dimensionally. WO03/036457 discloses circular motion on a ring sensor for interpretation into one-dimensional upwards or downwards scrolling.

The invention is defined by the appended claims.

### BRIEF DESCRIPTION OF THE DRAWINGS

Exemplary methods and arrangements conducted and configured according to the advantageous solutions presented herein are depicted in the accompanying drawings wherein:

FIG. 1 illustrates an exemplary handheld communication device cradled in the palm of a user's hand, in which communication device an input mechanism according to the present teachings may be incorporated;

FIG. 2 is a block diagram representing a wireless handheld communication device interacting in a communication network;

FIG. 3a illustrates an exemplary QWERTY keyboard layout;

FIG. 3b illustrates an exemplary QWERTZ keyboard layout;

FIG. 3c illustrates an exemplary AZERTY keyboard layout;

FIG. 3d illustrates an exemplary Dvorak keyboard layout;

FIG. 4 illustrates a QWERTY keyboard layout paired with a traditional ten-key keyboard;

FIG. 5 illustrates ten digits comprising the numerals 0-9 arranged in a traditional, ITU Standard E.161 numeric telephone keypad layout, including the * and # keys flanking the 0 key;

FIG. 6 illustrates a traditional or standard phone key arrangement or layout according to the ITU Standard E.161 including both numerals and letters;

FIG. 7 illustrates a handheld electronic communication running a first program accepting input from a user input device according to this disclosure;

FIG. 8 illustrates applying a circular motion about an exposed portion of a trackball according to this disclosure with a first program presented on the display screen;

FIG. 9 illustrates applying a different circular motion about an exposed portion of a trackball according to this disclosure with the first program presented on the display screen;

FIG. 10 illustrates applying a circular motion about an exposed portion of a trackball according to this disclosure with a second program presented on the display screen;

FIG. 11 illustrates applying a circular motion about an exposed portion of a trackball according to this disclosure with a third program presented on the display screen;

FIG. 12 illustrates applying a different circular motion about an exposed portion of a trackball according to this disclosure with the third program presented on the display screen; and

FIG. 13 is a flow chart illustrating an exemplary method for executing cursor navigation on a display screen of a handheld electronic communication device.

### DETAILED DESCRIPTION

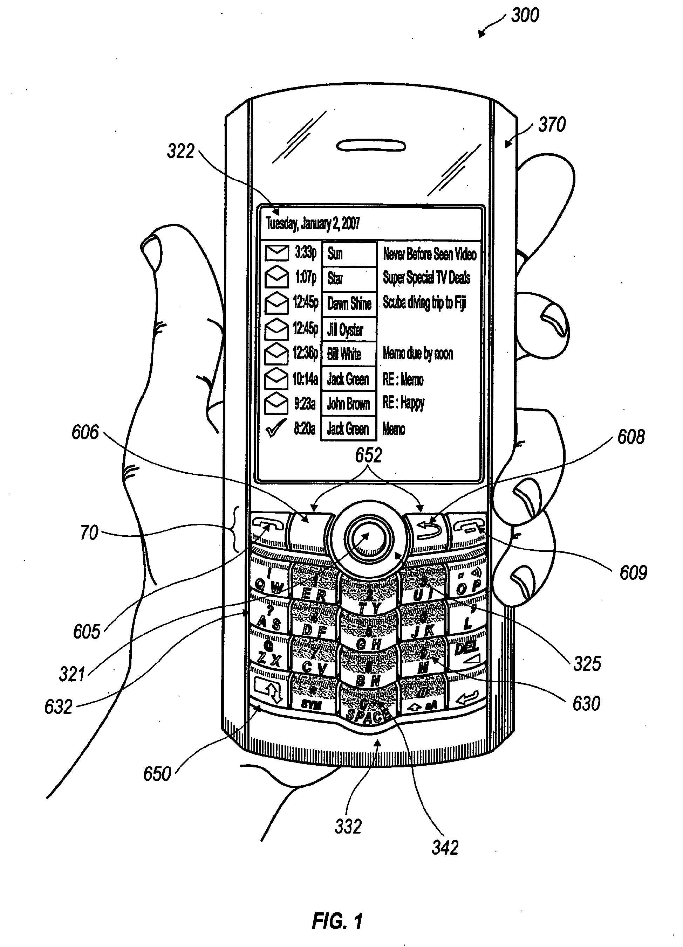

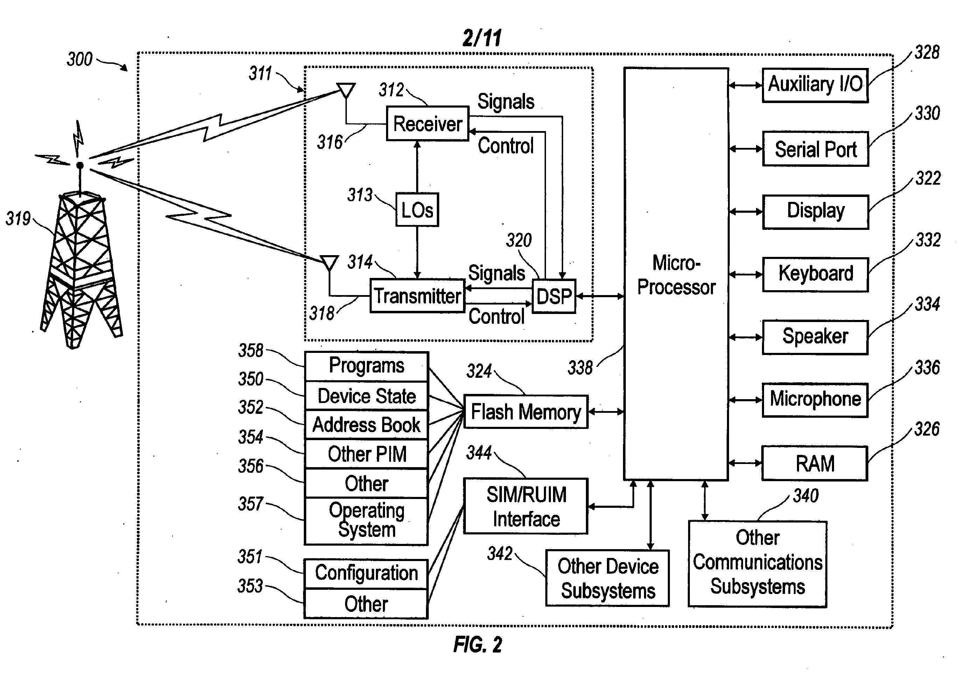

An exemplary handheld electronic communication device 300 is shown in FIG. 1, and the device's cooperation in a wireless network 319 is exemplified in the block diagram of FIG. 2. These figures are exemplary only, and those persons skilled in the art will appreciate the additional elements and modifications necessary to make the handheld electronic communication device 300 work in particular network environments.

As shown in the block diagram of FIG. 2, the handheld electronic communication device 300 includes a microprocessor 338 that controls the operation of the handheld electronic communication device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display screen 322, a keyboard 332, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a Wi-Fi communication module (a communication module in compliance with IEEE 802.11b) and associated circuits and components. Additionally, the microprocessor 338 is able to perform operating system functions and preferably enables execution of software applications on the handheld electronic communication device 300.

The auxiliary I/O subsystem 328 can take the form of a variety of different navigation tools (multi-directional or single-directional) such as a trackball navigation tool 325 as illustrated in the examplary embodiment shown in FIG. 1. These navigation tools 325 are preferably located on the front surface of the handheld electronic communication device 300 but may be located on any exterior surface of the handheld electronic communication device 300. Other auxiliary I/O subsystems can include external display devices and externally connected keyboards (not shown). While the above examples have been provided in relation to the auxiliary I/O subsystem 328, other subsystems capable of providing input or receiving output from the handheld electronic communication device 300 are considered within the scope of this disclosure. Additionally, other keys may be placed along the side of the handheld electronic communication device 300 to function as escape keys, volume control keys, scrolling keys, power switches, or user programmable keys and may likewise be programmed accordingly.

As may be appreciated from FIG. 1, the handheld electronic communication device 300 comprises a lighted display screen 322 located above a keyboard 332 constituting a user input and suitable for accommodating textual input to the handheld electronic communication device 300. The front face of the body 370 of the handheld electronic communication device has a navigation row 70 and a key field 650 that includes alphanumeric input keys 630, alphabetic input keys 632, numeric input keys 42, and other function keys as shown in FIG. 1. As shown, the handheld electronic communication device 300 is of unibody construction, also known as a "candy-bar" design.

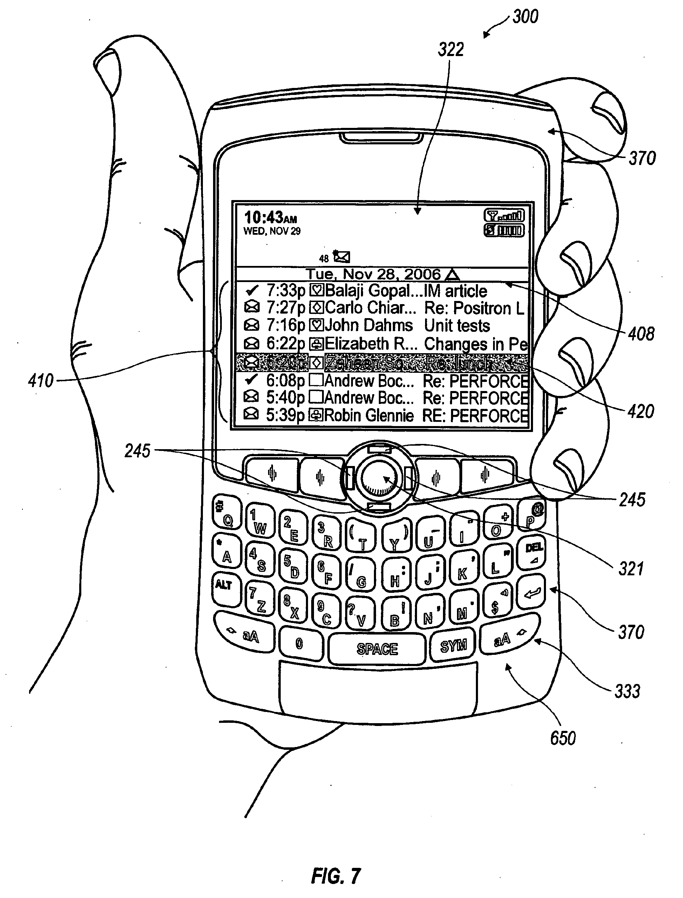

Keys, typically of a push-button or push-pad nature, perform well as data entry devices but present problems to the user when they must also be used to effect navigational control over a screen-cursor. In order to solve this problem, the present handheld electronic communication device 300 preferably includes an auxiliary input that acts as a cursor navigational tool and which is also exteriorly located upon the front face of the body 370 of the handheld electronic communication device 300. Its front face location is particularly advantageous because it makes the tool easily thumb-actuable like the keys of the keyboard. A particularly usable embodiment provides the navigational tool in the form of a trackball input device 321, further details of which are provided below and in FIGS. 7-12, which is easily utilized to affect one-dimensional substantially continuous cursor movement on the display screen 322 in correspondence to circular motion applied about an external portion of the trackball 321. The placement of the trackball user input device navigation tool 325 is preferably above the keyboard 332 and below the display screen 322; here, it avoids interference during keyboarding and does not block the user's view of the display screen 322 during use. (See FIG. 1).

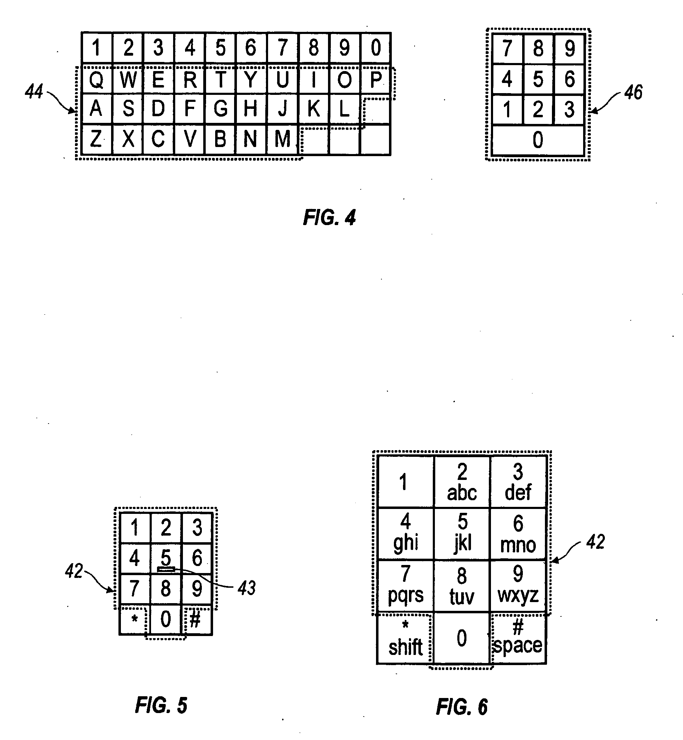

As illustrated in FIGS. 1 and 2, the present disclosure is directed to a handheld electronic communication device 300 configured to send and receive text messages. The handheld electronic communication device 300 includes a hand cradleable body configured to be held in one hand by an operator of the device during text entry. A display screen 322 is included that is located on a front face of the body 370 and upon which information is displayed to the operator during text entry. A key field 650 is also located on the front face of the body 370 of the elongate body and comprises a plurality of keys including a plurality of alphanumeric keys, symbol keys, and function keys. A navigation row 70 including menu keys 652 and a user input device 321 is also located on the front face of the body 370. The alphanumeric input keys 630 comprise a plurality of alphabetic and/or numeric input keys 632, 42 having letters and/or numbers associated therewith. The order of the letters of the alphabetic input keys 632 on the presently disclosed handheld electronic communication device can be described as being of a traditional, but non-ITU Standard E.161 layout. This terminology has been utilized to delineate the fact that such a telephone keypad as depicted in FIG. 6 may not allow for efficient text entry on the handheld electronic communication device 300.

The handheld electronic communication device 300 is also configured to send and receive voice communications such as mobile telephone callus. To facilitate telephone calls, two call keys 605, 609 ("outer keys") are provided in the upper, navigation row 70 (so-called because it includes the user input device navigation tool 325) at the outer ends of the navigation row 70. One of the two call keys is a call initiation key 605, and the other is a call termination key 609. The navigation row 70 also includes another pair of keys ("flanking keys") that are located immediately adjacent to the user input device navigation tool 325, with one flanking key on either side of the user input device navigation tool 325. It is noted that the outer keys are referred to as such not because they are necessarily the outermost keys in the navigation row - there may be additional keys located even further outwardly of the outer keys if desired - but rather because they are located outwardly with respect to the flanking keys. The flanking keys may, for instance, constitute the menu keys 652, which include a menu call-up key 606 and an escape or back key 608. The menu call-up key 606 is used to bring up a menu on the display screen 322 and the escape key 608 is used to return to the previous screen or previous menu selection. The functions of the call keys and the menu keys may, of course, be provided by buttons that are located elsewhere on the device, with different functions assigned to the outer keys and the flanking keys.

Furthermore, the device is equipped with components to enable operation of various programs, as shown in FIG. 2. In an exemplary embodiment, the flash memory 324 is enabled to provide a storage location for the operating system 357, application programs 358, and data. The operating system 357 is generally configured to manage other application programs 358 that are also stored in flash memory 324 and executable on the microprocessor 338. The operating system 357 honors requests for services made by application programs 358 through predefined application program 358 interfaces. More specifically, the operating system 357 typically determines the order in which multiple application programs 358 are executed on the microprocessor 338 and the execution time allotted for each application program 358, manages the sharing of flash memory 324 among multiple application programs 358, handles input and output to and from other device subsystems 342, and so on. In addition, users can typically interact directly with the operating system 357 through a user interface usually including the keyboard 332 and display screen 322. While in an exemplary embodiment the operating system 357 is stored in flash memory 324, the operating system 357 in other embodiments is stored in read-only memory (ROM) or similar storage element (not shown). As those skilled in the art will appreciate, the operating system 357, device application program 358 or parts thereof may be loaded in RAM 326 or other volatile memory.

In one exemplary embodiment, the flash memory 324 contains application programs 358 for execution on the handheld electronic communication device 300 including an address book 352, a personal information manager (PIM) 354, and the device state 350. Furthermore, application programs 358 and other information 356 including data can be segregated upon storage in the flash memory 324 of the handheld electronic communication device 300.

When the handheld electronic communication device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UTMS) network, the Enhanced Data for Global Evolution (EDGE) network, and the Code Division Multiple Access (CDMA) network and those networks, generally described as packet-switched, narrowband, data-only technologies which are mainly used for short burst wireless data transfer. For the systems listed above, the handheld electronic communication device 300 must be properly enabled to transmit and receive signals from the communication network 319. Other systems may not require such identifying information. GPRS, UMTS, and EDGE require the use of a Subscriber Identity Module (SIM) in order to allow communication with the communication network 319. Likewise, most CDMA systems require the use of a Removable Identity Module (RUIM) in order to communicate with the CDMA network. The RUIM and SIM card can be used in multiple different handheld electronic communication devices 300. The handheld electronic communication device 300 may be able to operate some features without a SIM/RUIM card, but it will not be able to communicate with the network 319. A SIM/RUIM interface 344 located within the handheld electronic communication device 300 allows for removal or insertion of a SIM/RUIM card (not shown). The SIM/RUIM card features memory and holds key configurations 351, and other information 353 such as identification and subscriber related information. With a properly enabled handheld electronic communication device 300, two-way communication between the handheld electronic communication device 300 and communication network 319 is possible.

If the handheld electronic communication device 300 is enabled as described above or the communication network 319 does not require such enablement, the two-way communication enabled handheld electronic communication device 300 is able to both transmit and receive information from the communication network 319. The transfer of communication can be from the handheld electronic communication device 300 or to the handheld electronic communication device 300. In order to communicate with the communication network 319, the handheld electronic communication device 300 in the presently described exemplary embodiment is equipped with an integral or internal antenna 318 for transmitting signals to the communication network 319. Likewise the handheld electronic communication device 300 in the presently described exemplary embodiment is equipped with another antenna 316 for receiving communication from the communication network 319. These antennae (316, 318) in another exemplary embodiment are combined into a single antenna (not shown). As one skilled in the art would appreciate, the antenna or antennae (316, 318) in another embodiment are externally mounted on the handheld electronic communication device 300.

When equipped for two-way communication, the handheld electronic communication device 300 features a communication subsystem 311. As is well known in the art, this communication subsystem 311 is modified so that it can support the operational needs of the handheld electronic communication device 300. The subsystem 311 includes a transmitter 314 and receiver 312 including the associated antenna or antennae (316, 318) as described above, local oscillators (LOs) 313, and a processing module 320 which in the presently described exemplary embodiment is a digital signal processor (DSP) 320.

It is contemplated that communication by the handheld electronic communication device 300 with the wireless network 319 can be any type of communication that both the wireless network 319 and handheld electronic communication device 300 are enabled to transmit, receive and process. In general, these can be classified as voice and data. Voice communication is communication in which signals for audible sounds are transmitted by the handheld electronic communication device 300 through the communication network 319. Data is all other types of communication that the handheld electronic communication device 300 is capable of performing within the constraints of the wireless network 319.

Example device applications that can depend on such data include email, contacts and calendars. For each such application synchronization with home-based versions on the applications can be critical for either or both of their long term and short term utility. As an example, emails are often time sensitive, so substantially real time synchronization is highly desirable. Contacts, on the other hand, can be usually updated less frequently without inconvenience. Therefore, the utility of the handheld electronic communication device 300 is significantly enhanced (if not enabled) when connectable within a communication system, and particularly when connectable on a wireless basis in a network 319 in which voice, text messaging, and other data transfer are accommodated.

As intimated hereinabove, one of the more important aspects of the handheld electronic communication device 300 to which this disclosure is directed is its size. While some users will grasp the handheld electronic communication device 300 in both hands, it is intended that a predominance of users will cradle the handheld electronic communication device 300 in one hand in such a manner that input and control over the handheld electronic communication device 300 can be effected using the thumb of the same hand in which the handheld electronic communication device 300 is held. However, it is appreciated that additional control can be effected by using both hands. The size of the handheld electronic communication device 300 must be kept commensurately small, in order to have a handheld electronic communication device 300 that is easy to grasp and desirably pocketable. Of the device's dimensions, limiting its width is important for the purpose of assuring cradleability in a user's hand. Moreover, it is preferred that the width of the handheld electronic communication device 300 be maintained at less than eight centimeters (approximately three inches). Keeping the handheld electronic communication device 300 within these dimensional limits provides a hand cradleable unit that users prefer for its usability and portability. Limitations with respect to the height (length) of the handheld electronic communication device 300 are less stringent when considering hand-cradleability. Therefore, in order to gain greater size, the handheld electronic communication device 300 can be advantageously elongated so that its height is greater than its width, but still remains easily supported and operated in one hand.

A potential drawback is presented by the small size of the handheld electronic communication device 300 in that there is limited exterior surface area for the inclusion of user input and device output features. This is especially true for the "prime real estate" on the front face of the body 370 of the handheld electronic communication device 300, where it is most advantageous to include a display screen 322 that outputs information to the user. The display screen 322 is preferably located above a keyboard 332 that is utilized for data entry into the handheld electronic communication device 300 by the user. If the display screen 322 is provided below the keyboard 332, a problem occurs in that viewing the display screen 322 is inhibited when the user is inputting data using the keyboard 332. Therefore it is preferred that the display screen 322 be above the input area, thereby solving the problem by assuring that the hands and fingers do not block the view of the display screen 322 during data entry periods.

To facilitate textual data entry into the handheld electronic communication device 300, a keyboard 332 is provided. In the exemplary illustrated embodiment, a full alphabetic keyboard 332 is utilized in which there is one key per letter (with some of the letter keys also having numbers, symbols, or functions associated with them). In this regard, the associated letters can be advantageously organized in QWERTY, QWERTZ, AZERTY, or Dvorak layouts, among others, thereby capitalizing on certain users' familiarity with these various letter orders. In order to stay within the bounds of the limited front surface area, however, each of the keys must be commensurately small when, for example, twenty-six keys must be provided in the instance of the English language.

As shown in FIG. 1, the handheld electronic communication device 300 is cradleable in the palm of a user's hand. The handheld electronic communication device 300 is provided with a keyboard 332 to enter text data and place telephone calls and a display screen 322 for communicating information to the user. A connect/send key 605 is preferably provided to aid in the placement of a phone call. Additionally, a disconnect/end key 609 is provided. The send key 605 and end key 609 preferably are arranged in the navigation row 70 including the user input device navigation tool 325. Additionally, the navigation row 70 preferably has a menu call-up key 606 and a back key or escape key 608.

The keyboard 332 includes a plurality of keys that can be of a physical nature such as actuable buttons, or they can be of a software nature, typically constituted by virtual representations of physical keys on a display screen 322 (referred to herein as "virtual keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application program 358 or feature in use, specific keys can be enabled or disabled.

In the case of physical keys, all or a portion of the plurality of keys have one or more indicia representing character(s), command(s), and/or functions(s) displayed at their top surface and/or on the surface of the area adjacent the respective key. In the instance where the indicia of a key's function is provided adjacent the key, the indicia can be printed on the device cover beside the key, or in the instance of keys located adjacent the display screen 322. Additionally, current indicia for the key may be temporarily shown nearby the key on the display screen 322.

In the case of virtual keys, the indicia for the respective keys are shown on the display screen 322, which in one embodiment is enabled by touching the display screen 322, for example, with a stylus to generate the character or activate the indicated command or function. Some examples of display screens 322 capable of detecting a touch include resistive, capacitive, projected capacitive, infrared and surface acoustic wave (SAW) touchscreens.

Physical and virtual keys can be combined in many different ways as appreciated by those skilled in the art. In one embodiment, physical and virtual keys are combined such that the plurality of enabled keys for a particular application or feature of the handheld electronic communication device 300 is shown on the display screen 322 in the same configuration as the physical keys. Using this configuration, the user can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

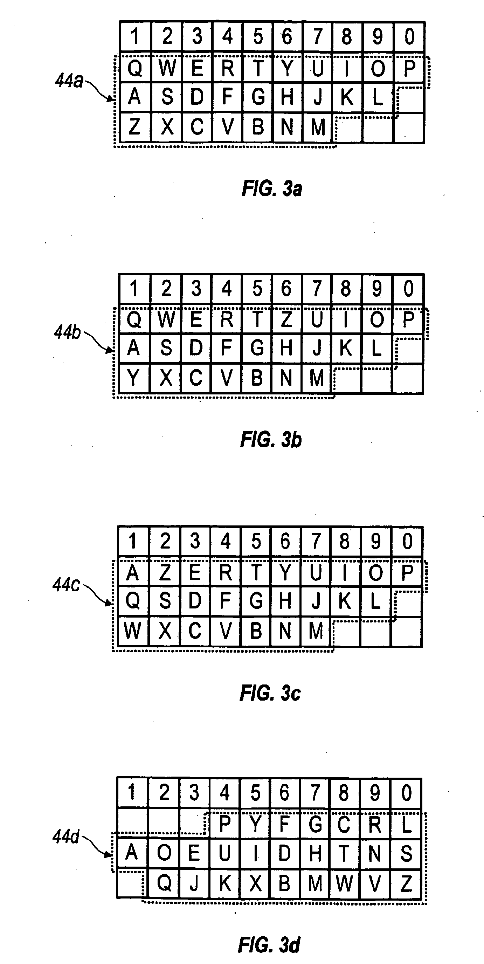

The various characters, commands, and functions associated with keyboard typing in general are traditionally arranged using various conventions. The most common of these in the United States, for instance, is the QWERTY keyboard layout. Others include the QWERTZ, AZERTY, and Dvorak keyboard configurations. The QWERTY keyboard layout is the standard English-language alphabetic key arrangement 44a shown in FIG. 3a. The QWERTZ keyboard layout is normally used in German-speaking regions; this alphabetic key arrangement 44b is shown in FIG. 3b. The AZERTY keyboard layout 44c is normally used in French-speaking regions and is shown in FIG. 3c. The Dvorak keyboard layout was designed to allow typists to type faster; this alphabetic key arrangement 44d is shown in FIG. 3d. In other exemplary embodiments, keyboards having multi-language key arrangements can be implemented.

Alphabetic key arrangements are often presented along with numeric key arrangements. Typically, the numbers 1-9 and 0 are positioned in the row above the alphabetic keys 44a-d, as shown in FIG. 3a-d. Alternatively, the numbers share keys with the alphabetic characters, such as the top row of the QWERTY keyboard. Yet another exemplary numeric key arrangement is shown in FIG. 4, where a "ten-key" style numeric keypad 46 is provided on a separate set of keys that is spaced from the alphabetic/numeric key arrangement 44. Still further, ten-key numeric arrangements may be common with or shared with a subset of the alphabetic keys. A ten-key styled numeric keypad includes the numbers "7", "8", "9" arranged in a top row; "4", "5", "6" arranged in a second row; "1", "2", "3" arranged in a third row; and "0" in a bottom row.

Further, a numeric phone key arrangement 42 is exemplarily illustrated in FIG. 5. As shown in FIG. 5, the numeric phone key arrangement 42 may also utilize a surface treatment on the surface of the center "5" key. This surface treatment is configured such that the top surface of the key is distinctive from the surface of other keys. Preferably the surface treatment is in the form of a raised bump or recessed dimple 43. Alternatively, raised bumps may be positioned on the housing around the "5" key and do not necessarily have to be positioned directly on the key.

It is desirable for handheld devices 300 to include a combined text-entry keyboard and a telephony keyboard. Examples of such handheld devices 300 include mobile stations, cellular telephones, wireless personal digital assistants (PDAs), two-way paging devices, and others. Various keyboards are used with such devices and can be termed a full keyboard, a reduced-format keyboard, or phone key pad. In embodiments of a handheld device 300 having a full keyboard, the alphabetic characters are singly associated with the plurality of physical keys. Thus, in an English-language keyboard of this configuration, there are at least 26 keys in the plurality, with one letter per alphabetic key.

FIGS. 5 and 6 both feature numeric keys arranged according to the ITU Standard E.161 form. In addition, FIG. 6 also incorporates alphabetic characters according to the ITU Standard E.161 layout as well. The International Telecommunications Union ("ITU") has established phone standards for the arrangement of alphanumeric keys. The standard phone numeric key arrangement shown in FIGS. 5 (no alphabetic letters) and 6 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. As shown in FIG. 4, the numeric key arrangement can be overlaid on a QWERTY arrangement. The numeric arrangement as shown can be aptly described as a top-to-bottom ascending order three-by-three-over-zero pattern.

While several keyboard layouts have been described above, the layouts can be described as having keys disposed on the keyboard in a QWERTY, reduced QWERTY, QWERTZ, Dvorak, or AZERTY key layout. These familiar keyboard layouts allow users to type more intuitively and more quickly than, for example, on the standard alphabetic layout on a telephone pad. As mentioned above, the key arrangements can be reduced compared to a standard layout through the use of more than one letter or character per key. By utilizing fewer keys, the keys can be made larger and therefore more convenient to the user.

As noted above, a navigation tool according to this disclosure suitably features a trackball based user input device 321. One embodiment of a trackball user input device 321 configured according to the present disclosure is illustrated in FIG. 7. The device body has a display screen 322 located above the trackball-based user input device. The trackball-based user input device 321 is a freely rotatable trackball mounted upon the device body. At least one sensor is operatively associated with the trackball 321. The one or more sensors are configured to sense motion induced in the trackball 321 when the trackball 321 is rotated by substantially circular motion applied about an exposed portion of the trackball 321 at the front face of the device body 370. The sensor(s) are further configured to output electronic data representative of the sensed induced trackball motion. A microprocessor 338 receives the output electronic data from the sensor(s) as input data and processes the input data into cursor guidance instructions. These cursor guidance instructions are outputted to the display screen 322 and affect one-dimensional, substantially continuous cursor movement on the display screen in correspondence with the sensed trackball motion.

As illustrated in FIG. 7, the at least one sensor comprises four sensors 245. In the embodiment illustrated in FIG. 7, the sensors 245 are hall-effect sensors capable of generating signals indicative of rotation of the trackball 321. Other sensors that can be used include optical sensors, magnetic sensors and mechanical sensors. These sensors are capable of generating signals in response to the motion induced in the trackball 321. These signals can in turn be transmitted to the microprocessor 338 as described herein.

In one embodiment, the microprocessor 338 is further programmed to discriminate clockwise versus counterclockwise substantially circular motion applied at the exposed portion of the trackball 321. This directional discrimination is based on input data received from the sensor(s).

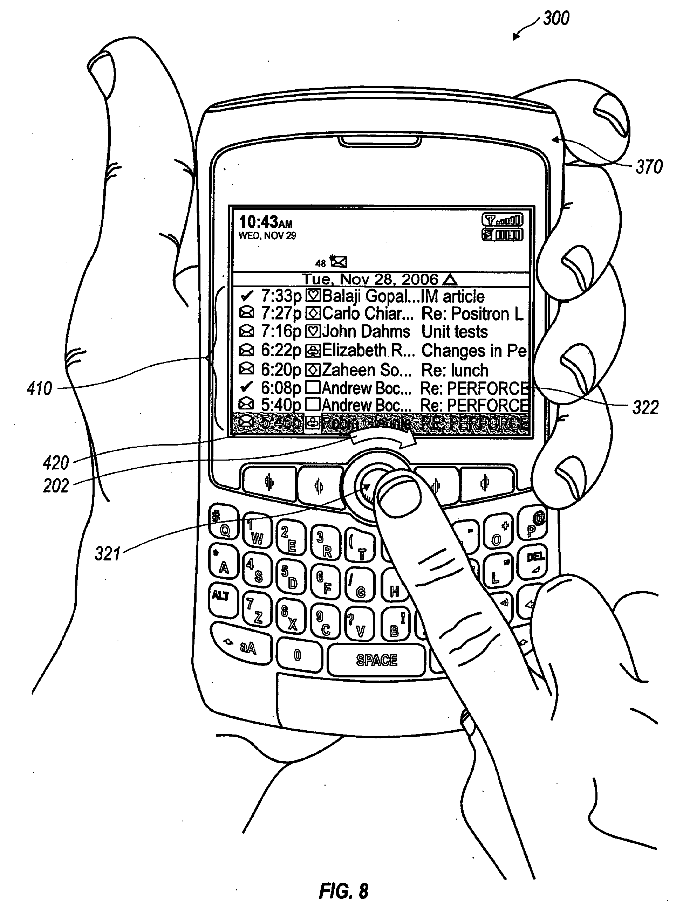

As illustrated in FIG. 8, one embodiment is shown in which substantially clockwise circular motion 202 is applied to the exposed portion of trackball 321. The freely rotatable trackball 321 is located between the display screen 322 and keyboard 332. The microprocessor 338 can be programmed to run an email application program. When the email application is open, the handheld electronic device 300 presents a listing of emails 410 on the display screen 322. The microprocessor 338 is further programmed to advance a message-designating cursor 420 sequentially across the listing in correspondence with the sensed trackball motion resulting from the substantially circular motion applied about the trackball 321. This first direction of instructed cursor movement is shown as downward cursor movement through a list of emails 410 on display screen 322. Optionally, the microprocessor 338 can be programmed to cause the advancing message-designating cursor 420 to pause upon each sequential member of the listing 410 thereby facilitating a paused-upon message being selected without cursor overrun and cursor reversal. As an example, the microprocessor may cause the message-designating cursor 420 of FIG. 8 to pause for a tenth of a second upon each sequential message of the listing while the message-designating cursor is advanced through the listing.

Other embodiments may include a handheld communication device 300 that displays a listing of any type of data items (messages, contact names, calendar entries, etc.), and the microprocessor 338 is programmed to advance a data-item-designating cursor sequentially across the listing in correspondence with sensed trackball motion resulting from substantially circular motion applied about the trackball 321. Again, the microprocessor of this embodiment can be programmed to cause the cursor to pause slightly on each member of the listing of data items to facilitate easy selection without overrun.

In yet another embodiment, the trackball 321 further functions as a depressible selection tool that is configured to, upon depression, send data indicative thereof to the microprocessor 338, and which is further programmed to take a particular action depending on which data item is cursor-designated when the depression occurs. For example, the depression of the trackball may function as a selection tool, wherein the item that is designated by the cursor is selected for further processing. For example, if the trackball is depressed while the data-item-designating cursor 420 is located on the email from "Zaheen," the microprocessor will open the email message from "Zaheen." Other selections and functions executed by depression of the trackball will be understood by those skilled in the art and which are considered within the scope of this disclosure.

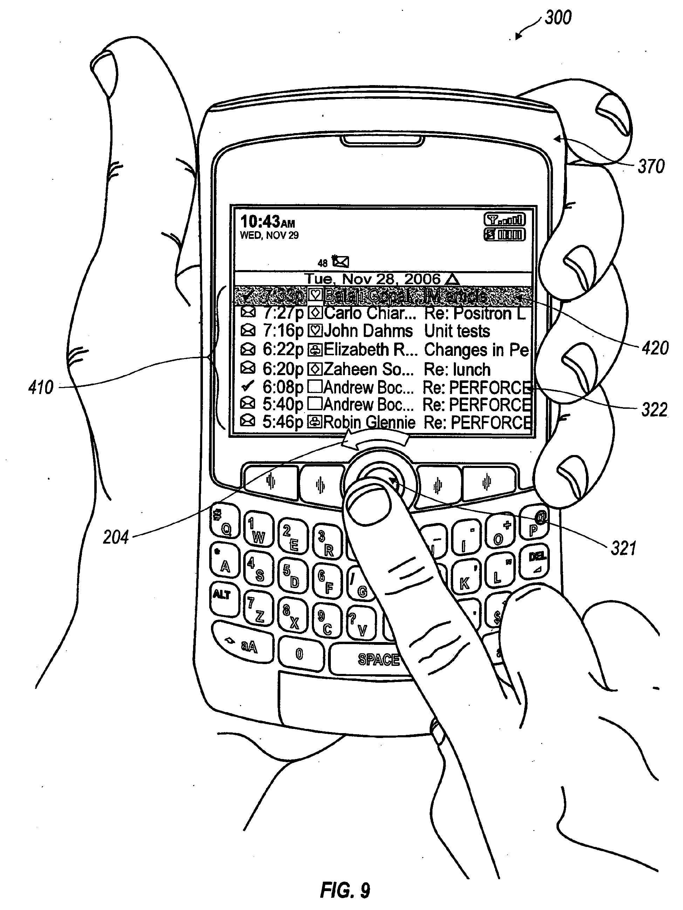

As illustrated in FIG. 9, one embodiment is shown in which substantially counterclockwise circular motion 204 is applied to the exposed portion of trackball 321. As illustrated, the freely rotatable trackball 321 is located between a display screen 322 and keyboard 332. In other embodiments, positioning of the trackball may be in other locations on the body of the device. Further, and as exemplified above, the microprocessor 338 can be programmed to run an email application program on the handheld electronic communication device 300 and display a listing of emails 410 on the display screen 322. However, here, the counterclockwise motion 204 of the trackball 321 instructs upward cursor movement through the list of emails 410 on display screen 322, where, as described above, clockwise motion of the trackball 321 instructed downward cursor movement.

A comparison of FIG. 8 and FIG. 9 illustrates that the second direction of cursor movement is a direction approximately 180 degrees relative and substantially opposite the first direction of instructed cursor movement when originating from the cursor position of FIG. 7. In the above described situation, the cursor is originally located in the center position of the email listing 410 and after having been instructed through clockwise rotation of the trackball 321, the cursor 420 moves downward in the listing (FIG. 8). When the trackball is rotated in the counterclockwise direction when the cursor is in either of the positions of FIG. 7 or 8, the cursor moves up the listing and can be stopped at a particular email as illustrated in FIG. 9. The cursor's movement to get to the position illustrated in FIG. 8 from the position of FIG. 7 is substantially opposite the direction of movement to get to the position of FIG. 9 from that of FIG. 7. Other similar movements are considered to be within the scope of this disclosure. It should be appreciated, however, that the two directions of motion of the cursor need not be necessarily linear, but generally opposite one to the other. This general concept of opposite direction motion also applies to screen scrolling motions where generally opposite direction scrolling (up vs. down or left vs. right or zoom in vs. zoom out) is induced by clockwise/counterclockwise trackball rotation.

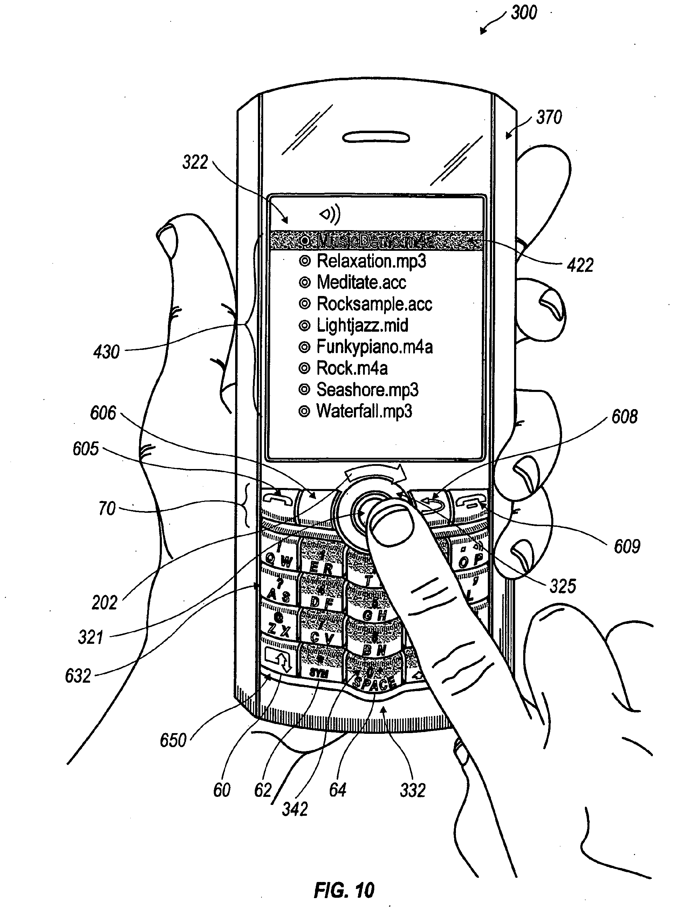

FIG. 10 shows an embodiment where the microprocessor 338 is programmed to run an audio entertainment application program on the handheld electronic communication device 300 that displays a listing of musical items or audio files on the display screen 322. The microprocessor 338 is further programmed to advance a musical-item-designating cursor 422 sequentially across the listing in correspondence with sensed trackball motion resulting from substantially circular motion applied about the trackball 321. The particular embodiment of FIG. 10 illustrates clockwise substantially circular motion 202 applied about the trackball 321. Furthermore, an embodiment may include the microprocessor 338 being further programmed to cause the advancing musical-item-designating cursor 422 to pause upon each sequential musical item of the listing. This allows a paused upon musical item to be selected without cursor overrun or reversal.

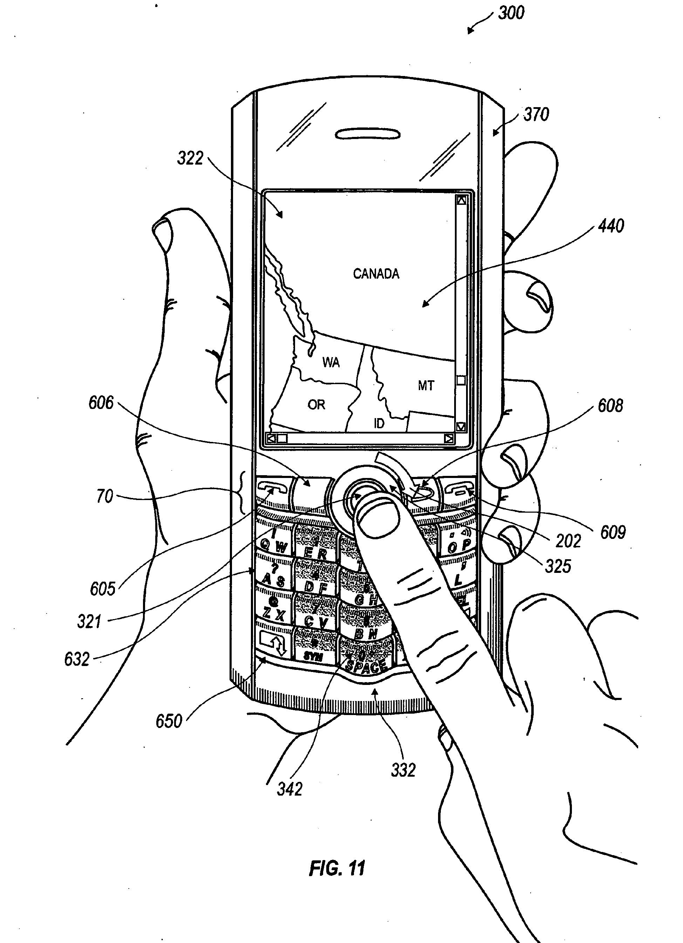

FIG. 11 shows an embodiment where the microprocessor 338 is programmed to run a webpage display program on the handheld electronic communication device 300 which displays a webpage on the display screen 322. In this embodiment the microprocessor 338 is further programmed to scroll the displayed webpage in correspondence with sensed trackball motion resulting from substantially circular motion applied about the trackball. In this particular embodiment, the webpage scrolls downward in response to clockwise substantially circular motion 202 applied about the trackball 321. Other embodiments may include scrolling (up vs. down or left vs. right or zoom in vs. zoom out etc.) of digital pictures, digital maps, and other images too large to be seen on the display all at one time.

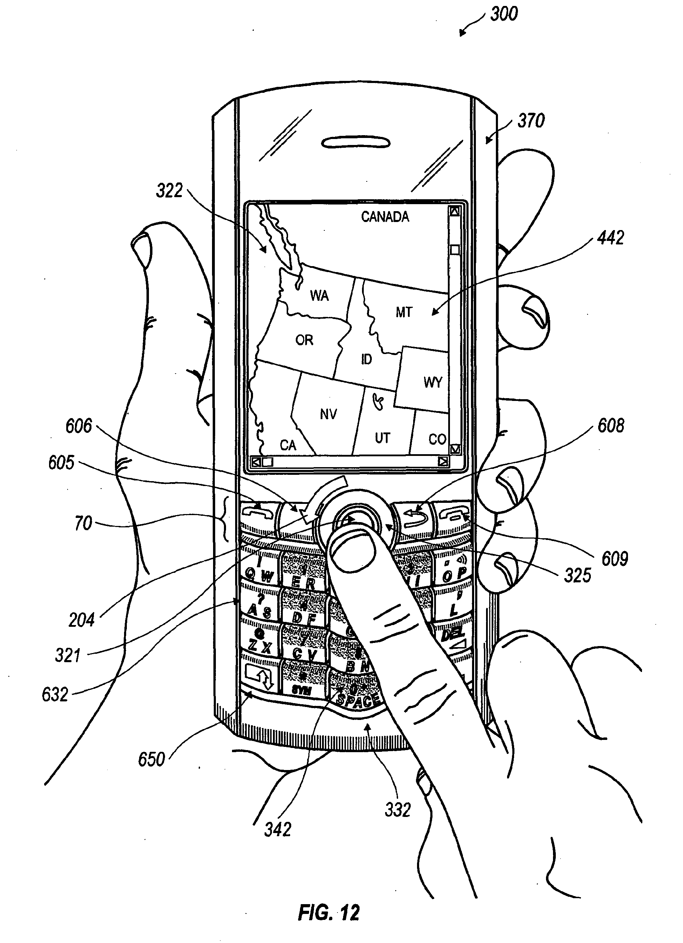

FIG. 12 shows an embodiment where the microprocessor 338 is programmed to run a webpage display program on the handheld electronic communication device 300 which displays a webpage on the display screen 322. In this embodiment the microprocessor 338 is further programmed to scroll the displayed webpage in correspondence with sensed trackball motion resulting from substantially circular motion applied about the trackball. In this embodiment the webpage scrolls upward in response to counterclockwise substantially circular motion 204 applied about the trackball 321.

In another embodiment, the one dimensional, substantially continuous cursor movement can be affected by the microprocessor 338 being programmed to zoom in and out on a displayed webpage, digital picture, digital map and the like in correspondence with sensed trackball motion resulting from substantially clockwise/counterclockwise circular motion applied about the trackball. It is worth noting that the one dimensional, substantially continuous cursor movement can be set by a user, set by a specific software application, or set by an operating system.

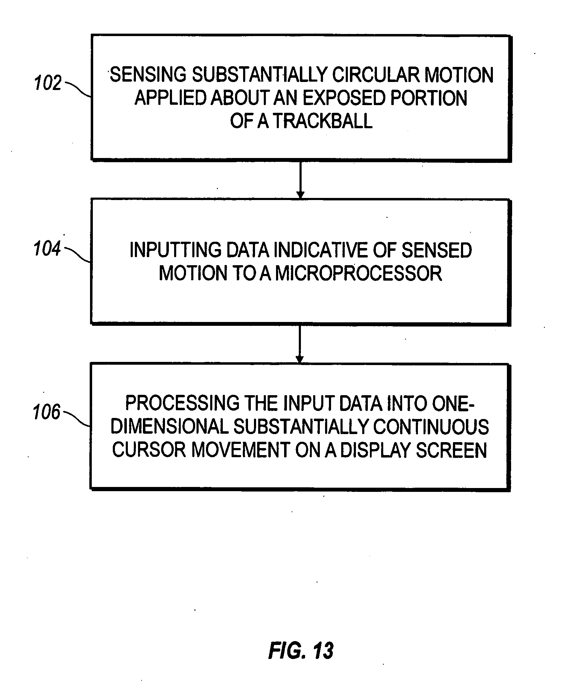

In at least one embodiment, a method for executing cursor navigation on a display screen of a handheld electronic communication device is disclosed and as illustrated in FIG. 13. The method involves sensing when a trackball-based user input device is rotated by substantially circular motion applied about an exposed portion of the trackball-based user input device (block 102). In this embodiment the trackball-based user input device is located at the front face of the body of the handheld electronic device. Additionally, a display screen is located above the trackball-based user input device. This embodiment further involves inputting data indicative of the sensed motion of the trackball to a microprocessor (block 104). The microprocessor is programmed to receive cursor guidance instructions via the sensor and to cause corresponding cursor movement on the display screen. This embodiment further involves processing the input data into cursor guidance instructions that are outputted to the display screen. These cursor guidance instructions affect one-dimensional, substantially continuous cursor movement on the display screen in correspondence with the sensed trackball motion (block 106).

Additionally, a computer program for executing cursor navigation on a handheld electronic communication device is disclosed. The program is configured to run on a microprocessor in the handheld electronic communication device. The program receives data indicative of sensed motion induced in a freely rotatable trackball of a trackball-based user input device. In this embodiment the trackball-based user input is embedded in a front face of a body of the handheld electronic communication device. The program causes one-dimensional, substantially continuous cursor movement on the display screen when the trackball is rotated by substantially circular motion applied about an exposed portion of the trackball. The trackball-based user input is located at the front face of the body of the handheld communication device.

Exemplary embodiments have been described hereinabove regarding both handheld electronic communication devices 300 as well as the communication networks 319 within which they operate. Various modifications to and departures from the disclosed embodiments will occur to those having skill in the art. The subject matter that is intended to be within the spirit of this disclosure is set forth in the following claims.

## Claims

1. A handheld electronic communication device (300), comprising:
a device body (370) having a display screen (322) and a trackball-based user input device, said trackball-based user input device comprising a freely rotatable trackball (321) mounted upon said device body (370);
at least one sensor (245) operatively associated with the trackball (321), said at least one sensor (245) configured to sense motion induced in said trackball when the trackball (321) is rotated by circular motion applied about an exposed portion of the trackball (321) and said sensor (245) further configured to output electronic data representative of the sensed induced trackball motion; and
a microprocessor (338) communicatively interposed between the at least one sensor (245) and the display screen (322) and programmed to receive the output electronic data from the at least one sensor (245) as input data and to further discriminate clockwise (202) versus counterclockwise (204) substantially circular motion applied about the exposed portion of the trackball (321) based on the input data received from the at least one sensor (245) and to process said input data into cursor guidance instructions that are outputted to the display screen (322) and which affect one-dimensional, continuous cursor movement on the display screen (322) in correspondence with the sensed trackball motion.

2. The handheld electronic communication device (300) as recited in claim 1, wherein said microprocessor (338) is further programmed to instruct cursor movement in a first direction when applied clockwise circular motion is discriminated.

3. The handheld electronic communication device (300) as recited in claim 2, wherein said microprocessor (338) is further programmed to instruct cursor movement in a second direction when applied clockwise circular motion is discriminated.

4. The handheld electronic communication device (300) as recited in claim 3, wherein said second direction of instructed cursor movement is a direction approximately 180 degrees relative said first direction of instruct cursor movement.

5. The handheld electronic communication device (300) as recited in claim 3, wherein said second direction of instructed cursor movement is opposite to said first direction of instruct cursor movement.

6. The handheld electronic communication device (300) as recited in any one of claims 1-5, wherein said microprocessor (338) is programmed to run an application program on the handheld electronic communication device (300) which displays a listing of data items on the display screen (322) and said microprocessor (338) is further programmed to advance a data-item-designating cursor sequentially across said listing in correspondence with sensed trackball motion resulting from circular motion applied about the trackball (321).

7. The handheld electronic communication device (300) as recited in claim 6, wherein said microprocessor (338) is further programmed to cause the advancing data-item-designating cursor to pause upon each sequential member of said listing thereby facilitating a paused-upon data item being selected without cursor overrun and cursor reversal.

8. The handheld electronic communication device (300) as recited in claim 7, wherein said trackball (321) is a depressible selection tool that is configured to, upon depression, send data indicative thereof to said microprocessor (338) which is further programmed to take particular action in dependence upon which data item is cursor-designated when said depression occurs.

9. The handheld electronic communication device (300) as recited in any one of claims 1-8, wherein said microprocessor (338) is programmed to run an email application program on the handheld electronic communication device (300) which displays a listing of emails (410) on the display screen (322) and said microprocessor (338) is further programmed to advance a message-designating cursor sequentially across said listing (410) in correspondence with sensed trackball motion resulting from circular motion applied about the trackball (321).

10. The handheld electronic communication device (300) as recited in claim 9, wherein said microprocessor (338) is further programmed to cause the advancing message-designating cursor to pause upon each sequential message of said listing (410) thereby facilitating a paused-upon message being selected without cursor overrun and cursor reversal.

11. The handheld electronic communication device (300) as recited in one of the claims 1-10, wherein said microprocessor (338) is programmed to run an audio entertainment application program on the handheld electronic communication device (300) which displays a listing of musical items on the display screen (322) and said microprocessor (338) is further programmed to advance a musical-item-designating cursor (422) sequentially across said listing in correspondence with sensed trackball motion resulting from circular motion applied about the trackball (321).

12. The handheld electronic communication device (300) as recited in claim 11, wherein said microprocessor (338) is further programmed to cause the advancing musical-item-designating cursor (422) to pause upon each sequential musical item of said listing thereby facilitating a paused-upon musical item being selected without cursor overrun and cursor reversal.

13. The handheld electronic communication device (300) as recited in one of the claims 1-12, wherein said microprocessor (338) is programmed to run a webpage display program on the handheld electronic communication device (300) which displays a webpage on the display screen (322) and said microprocessor (338) is further programmed to scroll the displayed webpage in correspondence with sensed trackball motion resulting from circular motion applied about the trackball (321).

14. The handheld electronic communication device (300) as recited in claim 13, wherein said microprocessor (338) is programmed to scroll by zooming in or out on said webpage on said display screen (322).

15. The handheld electronic communication device (300) as recited in any one of claims1-14, further comprising a key field (650) including a plurality of alphabetic input keys (632).

16. The handheld electronic communication device (300) as recited in claim 15, wherein at least one of the plurality of alphabetic input keys (632) is a physically depressible key.

17. The handheld electronic communication device (300) as recited in claim 15, wherein at least one of the plurality of alphabetic input keys (632) has a plurality of letter indicia associated therewith.

18. The handheld electronic communication device (300) as recited in claim 17, wherein the letter indicia associated with the alphabetic input keys (632) are arranged in a QWERTY layout.

19. A method for executing cursor navigation on a display screen (322) of a handheld electronic communication device (300), the method comprising:
sensing, via a sensor (245), motion induced in a freely rotatable trackball (321) of a trackball-based user input device when the trackball (321) is rotated by circular motion applied about an exposed portion of the trackball (321) and wherein said handheld electronic communication device (300), has a body (370) further comprises a display screen (322) ;
inputting data indicative of the sensed motion of the trackball (321) to a microprocessor (338) communicatively interposed between the sensor (245) and the display screen (322), said microprocessor (338) being programmed to receive cursor guidance instructions via the sensor (245) and to cause corresponding cursor movement on the display screen (322), and said microprocessor being further programmed to discriminate clockwise (202) versus counterclockwise (204) circular motion applied about the exposed portion of the trackball (321) based on the input data received from the at least one sensor (245);
processing said input data into cursor guidance instructions that are outputted to the display screen (322) and which affect one-dimensional, continuous cursor movement on the display screen (322) in correspondence with the sensed trackball motion.

20. A computer program for executing cursor navigation on a handheld electronic communication device (300), said program configured to run on a microprocessor (338) in the handheld electronic communication device (300) and programmed to receive data indicative of sensed motion induced in a freely rotatable trackball (321) from at least one sensor (245) of a trackball-based user input device when the trackball (321) is rotated by circular motion applied about an exposed portion of the trackball (321) and wherein said handheld electronic communication device (300) has a body (370) further comprising a display screen (322) and wherein the microprocessor (338) is communicatively interposed between the at least one sensor (245) and the display screen (322), and said microprocessor (338) being further programmed to discriminate clockwise (202) versus counterclockwise (204) circular motion applied about the exposed portion of the trackball (321) based on the input data received from the at least one sensor (245) and being further programmed to cause one-dimensional, continuous cursor movement on the display screen (322) in correspondence with the sensed trackball motion.

## Patentansprüche

1. Handgehaltene bzw. tragbare elektronische Kommunikationsvorrichtung (300), die aufweist:
ein Vorrichtungsgehäuse (370) mit einem Anzeigebildschirm (322) und
einer Trackball-basierten Benutzereingabevorrichtung, wobei die Trackballbasierte Benutzereingabevorrichtung einen frei rotierbaren Trackball (321) aufweist, der auf dem Vorrichtungsgehäuse (370) angebracht ist; zumindest einen Sensor (245), der betriebsfähig mit dem Trackball (321) verbunden ist, wobei der zumindest eine Sensor (245) konfiguriert ist, eine in dem Trackball erzeugte Bewegung zu erfassen, wenn der Trackball (321) durch eine kreisförmige Bewegung rotiert wird, die auf einen exponierten Teil des Trackballs (321) angewendet wird, und der Sensor (245) weiter konfiguriert ist, elektronische Daten auszugeben, die für die erfasste erzeugte Trackball-Bewegung repräsentativ sind; und
einen Mikroprozessor (338), der kommunikativ zwischen dem zumindest einen Sensor (245) und dem Anzeigebildschirm (322) angeordnet ist und
programmiert ist, die ausgegeben elektronischen Daten von dem zumindest einen Sensor (245) als Eingabedaten zu empfangen und weiter zu unterscheiden zwischen einer im Wesentlichen kreisförmigen Bewegung im Uhrzeigersinn (202) und entgegen dem Uhrzeigersinn (204), die auf den exponierten Teil des Trackballs (321) angewendet wird, basierend auf den Eingabedaten, die von dem zumindest einen Sensor (245) empfangen werden, und die Eingabedaten in Cursorführungsanweisungen zu verarbeiten, die an den Anzeigebildschirm (322) ausgegeben werden und
die eine eindimensionale kontinuierliche Cursor-Bewegung auf dem Anzeigebildschirm (322) entsprechend der erfassten Trackball-Bewegung beeinflussen.

2. Handgehaltene bzw. tragbare elektronische Kommunikationsvorrichtung (300) gemäß Anspruch 1, wobei der Mikroprozessor (338) weiter programmiert ist, eine Cursor-Bewegung in eine erste Richtung anzuweisen, wenn eine angewendete kreisförmige Bewegung im Uhrzeigersinn erkannt wird.

3. Handgehaltene bzw. tragbare elektronische Kommunikationsvorrichtung (300) gemäß Anspruch 2, wobei der Mikroprozessor (338) weiter programmiert ist, eine Cursor-Bewegung in eine zweite Richtung anzuweisen, wenn eine angewendete kreisförmige Bewegung im Uhrzeigersinn erkannt wird.

4. Handgehaltene bzw. tragbare elektronische Kommunikationsvorrichtung (300) gemäß Anspruch 3, wobei die zweite Richtung der angewiesenen Cursor-Bewegung eine Richtung ungefähr 180 Grad relativ zu der ersten Richtung der angewiesenen Cursor-Bewegung ist.

5. Handgehaltene bzw. tragbare elektronische Kommunikationsvorrichtung (300) gemäß Anspruch 3, wobei die zweite Richtung der angewiesenen Cursor-Bewegung entgegengesetzt zu der ersten Richtung der angewiesenen Cursor-Bewegung ist.

6. Handgehaltene bzw. tragbare elektronische Kommunikationsvorrichtung (300) gemäß einem der Ansprüche 1 bis 5, wobei der Mikroprozessor (338) programmiert ist, ein Anwendungsprogramm auf der tragbaren elektronischen Kommunikationsvorrichtung (300) laufen zu lassen, das eine Liste von Datenelementen auf dem Anzeigebildschirm (322) anzeigt, und der Mikroprozessor (338) weiter programmiert ist, einen Datenelement-markierenden Cursor sequentiell über die Liste zu führen entsprechend der erfassten Trackball-Bewegung, die aus einer kreisförmigen Bewegung resultiert, die auf den Trackball (321) angewendet wird.

7. Handgehaltene bzw. tragbare elektronische Kommunikationsvorrichtung (300) gemäß Anspruch 6, wobei der Mikroprozessor (338) weiter programmiert ist, den sich vorwärts bewegenden Datenelement-markierenden Cursor zu veranlassen, auf jedem sequentiellen Element der Liste zu pausieren, wodurch erleichtert wird, dass ein Datenelement, auf dem pausiert wird, gewählt wird, ohne ein Cursor-Überrollen und eine Cursor-Umkehr.

8. Handgehaltene bzw. tragbare elektronische Kommunikationsvorrichtung (300) gemäß Anspruch 7, wobei der Trackball (321) ein drückbares Auswahlwerkzeug ist, das konfiguriert ist, bei einem Drücken, dies anzeigende Daten an den Mikroprozessor (338) zu senden, der weiter programmiert ist, eine bestimmte Aktion einzuleiten abhängig davon, welches Datenelement von dem Cursor markiert wird, wenn das Drücken stattfindet.

9. Handgehaltene bzw. tragbare elektronische Kommunikationsvorrichtung (300) gemäß einem der Ansprüche 1 bis 8, wobei der Mikroprozessor (338) programmiert ist, ein Email-Anwendungsprogramm auf der tragbaren elektronischen Kommunikationsvorrichtung (300) laufen zu lassen, das eine Liste von Emails (410) auf dem Anzeigebildschirm (322) anzeigt, und wobei der Mikroprozessor (338) weiter programmiert ist, einen Nachrichten-markierenden Cursor sequentiell über die Liste (410) zu führen entsprechend der erfassten Trackball-Bewegung, die aus einer kreisförmigen Bewegung resultiert, die auf den Trackball (321) angewendet wird.

10. Handgehaltene bzw. tragbare elektronische Kommunikationsvorrichtung (300) gemäß Anspruch 9, wobei der Mikroprozessor (338) weiter programmiert ist, den sich vorwärts bewegenden Nachrichten-markierenden Cursor zu veranlassen, auf jeder sequentiellen Nachricht der Liste (410) zu pausieren, wodurch erleichtert wird, dass eine Nachricht, auf der pausiert wird, gewählt wird, ohne ein Cursor-Überrollen und eine Cursor-Umkehr.

11. Handgehaltene bzw. tragbare elektronische Kommunikationsvorrichtung (300) gemäß einem der Ansprüche 1 bis 10, wobei der Mikroprozessor (338) programmiert ist, ein Audioentertainment-Anwendungsprogramm auf der tragbaren elektronischen Kommunikationsvorrichtung (300) laufen zu lassen, das eine Liste von Musikelementen auf dem Anzeigebildschirm (322) anzeigt, und wobei der Mikroprozessor (338) weiter programmiert ist, einen Musikelement-markierenden Cursor (422) sequentiell über die Liste zu führen entsprechend der erfassten Trackball-Bewegung, die aus einer kreisförmigen Bewegung resultiert, die auf den Trackball (321) angewendet wird.

12. Handgehaltene bzw. tragbare elektronische Kommunikationsvorrichtung (300) gemäß Anspruch 11, wobei der Mikroprozessor (338) weiter programmiert ist, den sich vorwärts bewegenden Musikelement-markierenden Cursor (422) zu veranlassen, auf jedem sequentiellen Musikelement der Liste zu pausieren, wodurch erleichtert wird, dass ein Musikelement, auf dem pausiert wird, gewählt wird, ohne ein Cursor-Überrollen und eine Cursor-Umkehr.

13. Handgehaltene bzw. tragbare elektronische Kommunikationsvorrichtung (300) gemäß einem der Ansprüche 1 bis 12, wobei der Mikroprozessor (338) programmiert ist, ein Webseite-Anzeigeprogramm auf der der tragbaren elektronischen Kommunikationsvorrichtung (300) laufen zu lassen, das eine Webseite auf dem Anzeigebildschirm (322) anzeigt, und wobei der Mikroprozessor (338) weiter programmiert ist, die angezeigte Webseite zu scrollen entsprechend der erfassten Trackball-Bewegung, die aus einer kreisförmigen Bewegung resultiert, die auf den Trackball (321) angewendet wird.

14. Handgehaltene bzw. tragbare elektronische Kommunikationsvorrichtung (300) gemäß Anspruch 13, wobei der Mikroprozessor (338) programmiert ist, zu scrollen durch Hineinzoomen oder Herauszoomen in die und aus der Webseite auf dem Anzeigebildschirm (322).

15. Handgehaltene bzw. tragbare elektronische Kommunikationsvorrichtung (300) gemäß einem der Ansprüche 1 bis 14, die weiter aufweist ein Tastenfeld (650), das eine Vielzahl von alphabetischen Eingabetasten (632) umfasst.

16. Handgehaltene bzw. tragbare elektronische Kommunikationsvorrichtung (300) gemäß Anspruch 15, wobei zumindest eine der Vielzahl von alphabetischen Eingabetasten (632) eine physikalisch drückbare Taste ist.

17. Handgehaltene bzw. tragbare elektronische Kommunikationsvorrichtung (300) gemäß Anspruch 15, wobei zumindest eine der Vielzahl von alphabetischen Eingabetasten (632) eine zugehörige Vielzahl von Buchstaben-Indicia hat.

18. Handgehaltene bzw. tragbare elektronische Kommunikationsvorrichtung (300) gemäß Anspruch 17, wobei die Buchstaben-Indicia, die zu den alphabetischen Eingabetasten (632) gehören, in einem QWERTY-Layout angeordnet sind.

19. Verfahren zur Ausführung einer Cursor-Navigation auf einem Anzeigebildschirm (322) einer handgehaltenen bzw. tragbaren elektronischen Kommunikationsvorrichtung (300), wobei das Verfahren aufweist:
Erfassen, durch einen Sensor (245), einer Bewegung, die in einem frei rotierbaren Trackball (321) einer Trackball-basierten Benutzereingabevorrichtung erzeugt wird, wenn der Trackball (321) durch eine kreisförmige Bewegung rotiert wird, die auf einen exponierten Teil des Trackballs (321) angewendet wird, und wobei die tragbare elektronische Kommunikationsvorrichtung (300) ein Gehäuse (370) hat, das weiter einen Anzeigebildschirm (322) aufweist;
Eingeben von Daten, welche die erfasste Bewegung des Trackballs (321) anzeigen, an einen Mikroprozessor (338), der kommunikativ zwischen dem Sensor (245) und dem Anzeigebildschirm (322) angeordnet ist, wobei der Mikroprozessor (338) programmiert ist, Cursorführungsanweisungen über den Sensor (245) zu empfangen und eine entsprechende Cursorbewegung auf dem Anzeigebildschirm (322) zu veranlassen, wobei der Mikroprozessor weiter programmiert ist, zu unterscheiden zwischen einer kreisförmigen Bewegung im Uhrzeigersinn (202) und entgegen dem Uhrzeigersinn (204), die auf den exponierten Teil des Trackballs (321) angewendet wird, basierend auf den Eingabedaten, die von dem zumindest einen Sensor (245) empfangen werden;
Verarbeiten der Eingabedaten in Cursorführungsanweisungen, die an den Anzeigebildschirm (322) ausgegeben werden und die eine eindimensionale kontinuierliche Cursorbewegung auf dem Anzeigebildschirm (322) entsprechend der erfassten Trackball-Bewegung beeinflussen.

20. Computerprogrammprodukt zur Ausführung einer Cursor-Navigation auf einer handgehaltenen bzw. tragbaren elektronischen Kommunikationsvorrichtung (300), wobei das Programm konfiguriert ist, auf einem Mikroprozessor (338) in der tragbaren elektronischen Kommunikationsvorrichtung (300) zu laufen und programmiert ist, Daten zu empfangen, die eine erfasste Bewegung anzeigen, die in einem frei rotierbaren Trackball (321) erzeugt wird, von zumindest einem Sensor (245) der Trackball-basierten Benutzereingabevorrichtung, wenn der Trackball (321) durch eine kreisförmige Bewegung rotiert wird, die auf einen exponierten Teil des Trackballs (321) angewendet wird, und wobei die tragbare elektronische Kommunikationsvorrichtung (300) ein Gehäuse (370) hat, das weiter einen Anzeigebildschirm (322) aufweist, und wobei der Mikroprozessor (338) kommunikativ zwischen dem zumindest einen Sensor (245) und dem Anzeigebildschirm (322) angeordnet ist, wobei der Mikroprozessor (338) weiter programmiert ist, zu unterscheiden zwischen einer kreisförmigen Bewegung im Uhrzeigersinn (202) und entgegen dem Uhrzeigersinn (204), die auf den exponierten Teil des Trackballs (321) angewendet wird, basierend auf den Eingabedaten, die von dem zumindest einen Sensor (245) empfangen werden, und weiter programmiert ist, eine eindimensionale kontinuierliche Cursorbewegung auf dem Anzeigebildschirm (322) entsprechend der erfassten Trackball-Bewegung zu veranlassen.

## Revendications

1. Dispositif de communication électronique portatif (300), comprenant :
un corps de dispositif (370) possédant un écran d'affichage (322) et un dispositif de saisie par l'utilisateur du type à bille de commande, ledit dispositif de saisie par l'utilisateur du type à bille de commande comprenant une bille de commande (321) tournant librement, montée sur ledit corps de dispositif (370) ;
au moins un capteur (245), associé en service à la bille de commande (321), ledit au moins un capteur (245) étant configuré pour détecter le mouvement appliqué à ladite bille de commande lorsque la bille de commande (321) est tournée par un mouvement circulaire appliqué à une partie exposée de ladite bille de commande (321) et ledit capteur (245) étant en outre configuré pour produire en sortie des données électroniques représentatives du mouvement appliqué à la bille de commande et détecté ; et
un microprocesseur (338), interposé pour communiquer entre ledit au moins un capteur (245) et l'écran d'affichage (322) et programmé pour recevoir les données électroniques produites par ledit au moins un capteur (245) comme données d'entrée et en outre pour faire la distinction entre un mouvement essentiellement circulaire appliqué dans le sens horaire (202) et dans le sens antihoraire (204) à la partie exposée de la bille de commande (321), sur la base des données d'entrée reçues dudit au moins un capteur (245), et pour traiter lesdites données d'entrée afin de produire des instructions de commande du curseur qui sont envoyées à l'écran d'affichage (322) et qui affectent un mouvement unidimensionnel et continu du curseur sur l'écran d'affichage (322), d'une manière qui correspond au mouvement de la bille de commande détecté.

2. Dispositif de communication électronique portatif (300) selon la revendication 1, dans lequel ledit microprocesseur (338) est en outre programmé pour commander un mouvement du curseur dans une première direction lorsqu'un mouvement circulaire appliqué dans le sens horaire est identifié.

3. Dispositif de communication électronique portatif (300) selon la revendication 2, dans lequel ledit microprocesseur (338) est en outre programmé pour commander un mouvement du curseur dans une seconde direction lorsqu'un mouvement circulaire appliqué dans le sens horaire est identifié.

4. Dispositif de communication électronique portatif (300) selon la revendication 3, dans lequel ladite seconde direction de commande du mouvement du curseur est une direction formant un angle d'environ 180 degrés avec ladite première direction de commande du mouvement du curseur.

5. Dispositif de communication électronique portatif (300) selon la revendication 3, dans lequel ladite seconde direction de commande du mouvement du curseur est opposée à ladite première direction de commande du mouvement du curseur.

6. Dispositif de communication électronique portatif (300) selon l'une quelconque des revendications 1 à 5, dans lequel ledit microprocesseur (338) est programmé pour exécuter sur le dispositif de communication électronique portatif (300) un programme applicatif qui affiche une liste d'éléments de données sur l'écran d'affichage (322) et ledit microprocesseur (338) est en outre programmé pour faire avancer séquentiellement un curseur désignant un élément de données dans ladite liste, d'une manière qui correspond au mouvement de la bille de commande détecté et résultant d'un mouvement circulaire appliqué à la bille de commande (321).

7. Dispositif de communication électronique portatif (300) selon la revendication 6, dans lequel ledit microprocesseur (338) est en outre programmé pour commander au curseur désignant un élément de données qui avance de marquer un arrêt sur chaque élément séquentiel de ladite liste, afin de faciliter la sélection d'un élément de données où l'arrêt est marqué sans que le curseur ne dépasse et ne doive être ramené en arrière.

8. Dispositif de communication électronique portatif (300) selon la revendication 7, dans lequel ladite bille de commande (321) est un outil de sélection pouvant être enfoncé qui, lorsqu'il est enfoncé, est configuré pour envoyer des données indicatives de cet état de fait audit microprocesseur (338), qui est en outre programmé pour entreprendre une action particulière en fonction de l'élément de données qui est désigné par le curseur lorsque ledit enfoncement se produit.

9. Dispositif de communication électronique portatif (300) selon l'une quelconque des revendications 1 à 8, dans lequel ledit microprocesseur (338) est programmé pour exécuter un programme applicatif de courriel sur le dispositif de communication électronique portatif (300), qui affiche une liste de courriels (410) sur l'écran d'affichage (322), et ledit microprocesseur (338) est en outre programmé pour faire avancer séquentiellement un curseur désignant un message dans ladite liste (410) d'une manière qui correspond au mouvement de la bille de commande détecté et résultant d'un mouvement circulaire appliqué à la bille de commande (321).

10. Dispositif de communication électronique portatif (300) selon la revendication 9, dans lequel ledit microprocesseur (338) est en outre programmé pour commander au curseur désignant un message qui avance de marquer séquentiellement un arrêt sur chaque message de ladite liste, afin de faciliter la sélection d'un message où l'arrêt est marqué sans que le curseur ne dépasse et ne doive être ramené en arrière.

11. Dispositif de communication électronique portatif (300) selon l'une quelconque des revendications 1 à 10, dans lequel ledit microprocesseur (338) est programmé pour exécuter un programme applicatif de loisirs sonores sur le dispositif de communication électronique portatif (300), qui affiche une liste de morceaux de musique sur l'écran d'affichage (322), et ledit microprocesseur (338) est en outre programmé pour faire avancer séquentiellement un curseur désignant un morceau de musique dans ladite liste d'une manière qui correspond au mouvement de la bille de commande détecté et résultant d'un mouvement circulaire appliqué à la bille de commande (321).

12. Dispositif de communication électronique portatif (300) selon la revendication 11, dans lequel ledit microprocesseur (338) est en outre programmé pour commander au curseur désignant un message qui avance de marquer séquentiellement un arrêt sur chaque morceau de musique de ladite liste, afin de faciliter la sélection d'un morceau de musique où l'arrêt est marqué sans que le curseur ne dépasse et ne doive être ramené en arrière.

13. Dispositif de communication électronique portatif (300) selon l'une quelconque des revendications 1 à 12, dans lequel ledit microprocesseur (338) est programmé pour exécuter un programme d'affichage de pages web sur le dispositif de communication électronique portatif (300), qui affiche une page web sur l'écran d'affichage (322) et ledit microprocesseur (338) est en outre programmé pour faire dérouler la page web affichée d'une manière qui correspond au mouvement de la bille de commande détecté et résultant d'un mouvement circulaire appliqué à la bille de commaride (321).

14. Dispositif de communication électronique portatif (300) selon la revendication 13, dans lequel ledit microprocesseur (338) est programmé pour dérouler en effectuant un zoom avant ou arrière sur ladite page web affichée sur ledit écran d'affichage (322).

15. Dispositif de communication électronique portatif (300) selon l'une quelconque des revendications 1 à 14, comprenant en outre un bloc de touches (650) comprenant une pluralité de touches alphabétiques de saisie (632).

16. Dispositif de communication électronique portatif (300) selon la revendication 15, dans lequel au moins une touche, sur la pluralité de touches alphabétiques de saisie (632), est une touche pouvant physiquement être enfoncée.

17. Dispositif de communication électronique portatif (300) selon la revendication 15, dans lequel au moins une touche, sur la pluralité de touches alphabétiques de saisie (632), est associée à une pluralité de symboles de lettres.

18. Dispositif de communication électronique portatif (300) selon la revendication 17, dans lequel les symboles de lettres associés aux touches alphabétiques de saisie (632) sont disposés selon une maquette QWERTY.

19. Procédé d'exécution de la navigation au curseur sur un écran d'affichage (322) d'un dispositif de communication électronique portatif (300), le procédé comprenant les étapes consistant à :
détecter à l'aide d'un capteur (245) le mouvement appliqué à une bille de commande (321), pouvant librement tourner, d'un dispositif de saisie par l'utilisateur du type à bille de commande, lorsque la bille de commande (321) est tournée sous l'effet d'un mouvement circulaire appliqué à une partie exposée de la bille de commande (321), ledit dispositif de communication électronique portatif (300) possédant un corps (370) qui comprend en outre un écran d'affichage (322) ;
saisir des données indicatives du mouvement de la bille de commande (321) détecté à un microprocesseur (338) qui est interposé pour communiquer entre le capteur (245) et l'écran d'affichage (322), ledit microprocesseur (338) étant programmé pour recevoir du capteur (245) des instructions de déplacement du curseur et pour commander un mouvement correspondant du curseur sur l'écran d'affichage (322) et ledit microprocesseur (338) étant en outre configuré pour distinguer entre un mouvement circulaire appliqué dans le sens horaire (202) et dans le sens antihoraire (204) sur la partie exposée de la bille de commande (321), sur la base des données d'entrée reçues dudit au moins un capteur (245) ;
traiter lesdites données d'entrée pour produire des instructions de commande du curseur qui sont envoyées à l'écran d'affichage (322) et qui affectent un mouvement unidimensionnel et continu du curseur sur l'écran d'affichage (322), d'une manière qui correspond au mouvement de la bille de commande détecté.

20. Programme d'ordinateur destiné à exécuter la navigation au curseur sur un dispositif de communication électronique portatif (300), ledit programme étant configuré pour s'exécuter sur un microprocesseur (338) sur le dispositif de communication électronique portatif (300) et étant programmé pour recevoir des données indicatives d'un mouvement détecté qui a été appliqué à la bille de commande (321) tournant librement en provenance d'au moins un capteur (245) d'un dispositif de saisie par l'utilisateur du type à bille de commande lorsque la bille de commande (321) est tournée par un mouvement circulaire appliqué à une partie exposée de la bille de commande (321) et dans lequel ledit dispositif de communication électronique portatif (300) possède un corps (370) qui comprend en outre un écran d'affichage (322) et dans lequel le microprocesseur (338) est interposé pour communiquer entre ledit au moins un capteur (245) et l'écran d'affichage (322), ledit microprocesseur (338) étant en outre programmé pour faire la distinction entre un mouvement circulaire appliqué dans le sens horaire (202) et dans le sens antihoraire (204) sur la partie exposée de la bille de commande (321), sur la base des données d'entrée reçues dudit au moins un capteur (245) et étant en outre programmé pour commander un mouvement unidimensionnel et continu du curseur sur l'écran d'affichage (322), d'une manière qui correspond au mouvement de la bille de commande détecté.
